(19) **Europäisches Patentamt / European Patent Office / Office européen des brevets**

(11) **EP 4 489 095 A1**

(12) **EUROPEAN PATENT APPLICATION**
published in accordance with Art. 153(4) EPC

(43) Date of publication:
08.01.2025 Bulletin 2025/02

(21) Application number: 23769846.9

(22) Date of filing: 15.03.2023

(51) International Patent Classification (IPC):
*H01M 4/13* [(2010.01)]

(52) Cooperative Patent Classification (CPC):
**H01M 4/13; H01M 10/052**

(86) International application number:
**PCT/CN2023/081698**

(87) International publication number:
**WO 2023/174344 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 15.03.2022 CN 202210251599

(71) Applicant: BYD Company Limited
Shenzhen, Guangdong 518118 (CN)

(72) Inventors:
• SU, Bizhe
  Shenzhen, Guangdong 518118 (CN)
• HAO, Rong
  Shenzhen, Guangdong 518118 (CN)
• ZHUANG, Minghao
  Shenzhen, Guangdong 518118 (CN)
• GE, Liping
  Shenzhen, Guangdong 518118 (CN)
• TIAN, Yecheng
  Shenzhen, Guangdong 518118 (CN)

(74) Representative: Arnold & Siedsma
Bezuidenhoutseweg 57
2594 AC The Hague (NL)

(54) **BATTERY AND ELECTRIC DEVICE**

(57)     A battery and an electrical device are provided. A positive electrode plate, a negative electrode plate, and an electrolyte solution in the battery satisfy:

$$Ce = A \times a \times [\sum_{i=20}^{m} (Bi \times Pci) + \sum_{ii=20}^{n} (Bii \times Paii)]/R$$

*Ce* is a liquid retention capability of the positive electrode plate and the negative electrode plate for the electrolyte solution, and a range of *Ce* is from 1.0 g/Ah to 5.0 g/Ah; *A* is a correction factor; *a* is a viscosity of the electrolyte solution at room temperature and is measured in mPa·s; *R* is a capacity of the battery and is measured in Ah; $B_i$ is a capillary index of a pore diameter of the positive material layer, $B_{ii}$ is a capillary index of a pore diameter of the negative material layer, and $B_i$ and $B_{ii}$ are measured in meter; *m* is a largest pore diameter in a pore diameter range of pores of the positive material layer, *i* is an average pore diameter in pore diameter ranges of pores of the positive material layer, and $Pc_i$ is a ratio of a volume of pores in the positive material layer with a pore diameter i to a volume of the positive material layer; and *n* is a largest pore diameter of pores of the negative material layer, *ii* is an average pore diameter of the pores of the negative material layer, and $Pa_{ii}$ is a ratio of a volume of pores in the negative material layer with a pore diameter *ii* to a volume of the negative material layer The battery has good cycle stability and high-capacity retention.

**EP 4 489 095 A1**

10

110 { 111
     { 112

121 } 120
122 }

150

140

130

**Description**

**CROSS-REFERENCE TO RELATED APPLICATIONS**

The present application claims priority to and benefits of Chinese Patent Application No. 202210251599.0, entitled "BATTERY AND ELECTRICAL DEVICE", and filed on March 15, 2022. The entire content of the above-referenced application is incorporated herein by reference.

**FIELD**

The present application relates to the field of lithium battery technologies, and specifically, to a battery and an electrical device.

**BACKGROUND**

During charging and discharging of a lithium battery, the positive electrode plate and the negative electrode plate undergo different degrees of volume change. Such a volume change causes the electrolyte solution between the electrode plates of the battery core to be squeezed out and flow back. However, a phenomenon that the electrolyte solution cannot flow back in a timely manner usually occurs, especially in batteries with a large volume, such as wound batteries and laminated batteries. When the electrolyte solution cannot flow back in a timely manner, a part of the electrode plates in the battery core is not in contact with the electrolyte solution, resulting in local lithium plating on the electrode plates during charging, and even a safety hazard.

Currently, in the industry, the problem is usually resolved by adjusting the composition of the electrolyte solution to increase force between the electrolyte solution and the electrode plates. However, this method has high requirements on matching between the electrolyte solution and a type of electrode plate, and is not general and universal.

**SUMMARY**

In view of this, in the present application, pore diameters and respective pore diameter distribution of a positive electrode plate and a negative electrode plate are adjusted, and the positive electrode plate, the negative electrode plate, and a viscosity of an electrolyte solution are controlled, to ensure that the positive electrode plate and the negative electrode plate have a strong liquid retention capability for the electrolyte solution, and reducing the occurrence of lithium plating during charging. Therefore, a battery has good cycle stability, high-capacity retention, and a long battery cycle life.

According to a first aspect of the present application, a battery is provided. The battery includes a positive electrode plate, a negative electrode plate, an electrolyte solution, and a separator between the positive electrode plate and the negative electrode plate. The positive electrode plate includes a positive current collector and a positive material layer disposed on the positive current collector, the negative electrode plate includes a negative current collector and a negative material layer disposed on the negative current collector, and the positive electrode plate, the negative electrode plate, and the electrolyte solution satisfes:

$$Ce = A \times a \times [\sum_{i=20}^{m} (Bi \times Pci) + \sum_{ii=20}^{n} (Bii \times Paii)]/R$$

Where, Ce is a liquid retention capability of the positive electrode plate and the negative electrode plate for the electrolyte solution, and a range of Ce is from 1.0 g/Ah to 5.0 g/Ah; A is a correction factor; a is a viscosity of the electrolyte solution at room temperature and is measured in mPa·s; R is a capacity of the battery and is measured in Ah; $B_i$ is a capillary index of a pore diameter of the positive material layer, $B_{ii}$ is a capillary index of a pore diameter of the negative material layer, and $B_i$ and $B_{ii}$ are measured in meter; m is a largest pore diameter of pores of the positive material layer, i is an average pore diameter of the pores of the positive material layer, and $Pc_i$ is a ratio of a volume of pores in the positive material layer with a pore diameter i to a volume of the positive material layer; and n is a largest pore diameter of pores of the negative material layer, ii is an average pore diameter of the pores of the negative material layer, and $Pa_{ii}$ is a ratio of a volume of pores in the negative material layer with a pore diameter ii to a volume of the negative material layer.

In some embodiments, R is in a range from 0.1 Ah to 300 Ah, and A is in a range from 0.01s to 100s.

In some embodiments, R is in a range from 10 Ah to 200 Ah.

In some embodiments, R is in a range from 10 Ah to 100 Ah.

In some embodiments, a distribution range of the pore diameter of the positive material layer is from 20 nm to 20000 nm, and a distribution range of the pore diameter of the negative material layer is from 20 nm to 20000 nm.

In some embodiments, a value of i is 20000 nm, 18000 nm, 15000 nm, 12000 nm, 10000 nm, 7500 nm, 6500 nm, 5500 nm, 5000 nm, 3500 nm, 2500 nm, 1800 nm, 1200 nm, 750 nm, 500 nm, 320 nm, 200 nm, 140 nm, 90 nm, 65nm, 50 nm, 40 nm, 30 nm, 20 nm, or between any two of above values; and a value of *ii* is 20000 nm, 18000 nm, 15000 nm, 12000 nm, 10000 nm, 7500 nm, 6500 nm, 5500 nm, 5000 nm, 3500 nm, 2500 nm, 1800 nm, 1200 nm, 750 nm, 500 nm, 320 nm, 200 nm, 140 nm, 90 nm, 65nm, 50 nm, 40 nm, 30 nm, 20 nm, or between any two of above values.

In some embodiments, a porosity of the positive material layer is in a range from 10% to 50%, and a porosity of the negative material layer is in a range from 10% to 70%.

In some embodiments, a minimum value of *i* and a minimum value of *ii* are 50, and a value of *m* and a value of *n* are 20000 nm.

In some embodiments, *a* is in a range from 0.5 mPa·s to 50 mPa·s.

In some embodiments, *a* is in a range from 0.5 mPa·s to 5 mPa·s.

In some embodiments, the electrolyte solution includes an organic solvent and a lithium salt, the lithium salt includes at least one of lithium hexafluorophosphate, lithium tetrafluoroborate, lithium bis(oxalato)borate, lithium difluoro(oxalato)borate, lithium bis(fluorosulfonyl)imide, lithium bis(trifluoromethanesulfonyl)imide, lithium difluorophosphate, or lithium 4,5-dicyano-2-(trifluoromethyl)imidazole, and the organic solvent includes at least one of ethylene carbonate, diethyl carbonate, dimethyl carbonate, or ethyl methyl carbonate.

In some embodiments, the electrolyte solution includes a viscosity modifier, and the viscosity modifier includes at least one of polyimide, polyvinylidene difluoride, or polyacrylic acid.

In some embodiments, the positive material layer includes a positive active material, a first conductive agent, and a first binder; and the negative material layer includes a negative active material, a second conductive agent, and a second binder.

According to a second aspect of the present application, an electrical device is provided. The electrical device includes the battery provided in the first aspect of the present application.

## BRIEF DESCRIPTION OF THE DRAWINGS

FIG. 1 is a schematic diagram of a structure of a battery according to an embodiment of the present application; and
FIG. 2 is a schematic diagram of a structure of an electrical device according to an embodiment of the present application.

Descriptions of reference numerals:

1-electrical device, 10-battery, 110-positive electrode plate, 111-positive current collector, 112-positive material layer, 120-negative electrode plate, 121-negative current collector, 122-negative material layer, 130-electrolyte solution, 140-separator, and 150-battery case.

## DETAILED DESCRIPTION

Usually, during charging and discharging of a battery, when volumes of active substances in a positive material layer and a negative material layer expand, a distance between the electrode plates decreases, and a part of electrolyte solutions is squeezed out. When the volumes of the active substances shrink, the distance between the electrode plates increases, and the electrolyte solutions flow back between the electrode plates. However, due to factors such as a flow characteristic of the electrolyte solution, the electrolyte solution cannot flow back in a timely manner. As a result, a part of the electrode plates in a battery core is not in contact with the electrolyte solution. Consequently, local lithium plating occurs, and safety of using the battery is affected.

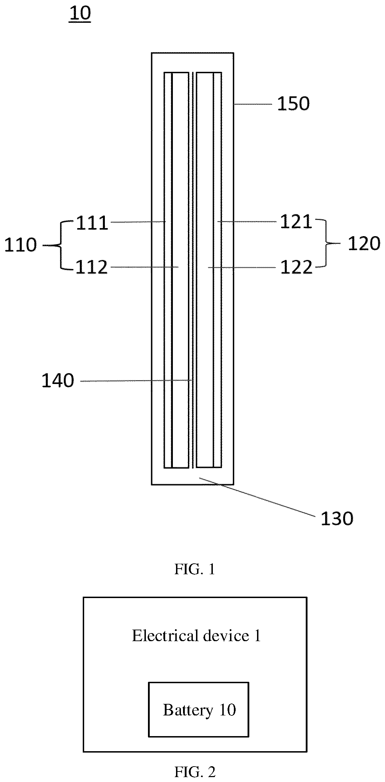

To resolve the foregoing technical problem, an embodiment of the present application provides a battery. As shown in FIG. 1, a battery 10 includes a positive electrode plate 110, a negative electrode plate 120, an electrolyte solution 130, and a separator 140 between the positive electrode plate 110 and the negative electrode plate 120. The positive electrode plate 110 includes a positive current collector 111 and a positive material layer 112 arranged/disposed on the positive current collector 111. The negative electrode plate 120 includes a negative current collector 121 and a negative material layer 122 arranged/disposed on the negative current collector 121. The positive electrode plate, the negative electrode plate, and the electrolyte solution satisfy the following relational expression:

$$Ce = A \times a \times [\sum_{i=20}^{m}(Bi \times Pci) + \sum_{ii=20}^{n}(Bii \times Paii)]/R.$$

Wherein, Ce represents a liquid retention capability of the positive electrode plate and the negative electrode plate for the electrolyte solution, and a range of Ce is from 1.0 g/Ah to 5.0 g/Ah; $A$ is a correction factor; $a$ is a viscosity of the electrolyte solution at room temperature, and a unit of the viscosity is mPa·s; $R$ is a capacity of the battery, and a unit of the capacity is Ah; $B_i$ is a capillary index of a pore diameter of the positive material layer, $B_{ii}$ is a capillary index of a pore diameter of the negative material layer, and $B_i$ and $B_{ii}$ are both measured in meter(m); $m$ represents a largest pore diameter in a pore diameter range of pores of the positive material layer, i is an average pore diameter in pore diameter ranges of the pores of the positive material layer, and $Pc_i$ is a ratio of a volume of pores in the positive material layer with a pore diameter $i$ to a volume of the positive material layer; and $n$ represents a largest pore diameter in a pore diameter range of pores of the negative material layer, $ii$ is an average pore diameter in pore diameter ranges of the pores of the negative material layer, and $Pa_{ii}$ is a ratio of a volume of pores in the negative material layer with a pore diameter $ii$ to a volume of the negative material layer, $i$ and $ii$ may be the same, and $m$ and $n$ may also be the same.

In the present application, the pore diameter $i$ of the pores in the positive material layer, the pore diameter $ii$ of the pores in the negative material layer, the pore diameter distribution $Pc_i$ of the positive material layer, and the pore diameter distribution $Pa_{ii}$ of the negative material layer are configured, to enable the parameters and the viscosity $a$ of the electrolyte solution to satisfy the foregoing relational expression, so that the liquid retention capability of the positive electrode plate and the negative electrode plate for the electrolyte solution can be greatly improved (that is, an interaction force between the electrode plate and the electrolyte solution is improved). When the viscosity of the electrolyte solution and a pore structure of the positive electrode plate and the negative electrode plate satisfy the foregoing relational expression, permeability of the electrolyte solution in the electrode plate can be improved, and the electrolyte solution in a pore of the electrode plates cannot be easily squeezed out of the electrode plates due to pressing force generated by expansion of a volume of an active material. Therefore, an overflow of the electrolyte solution caused by expansion of a volume of the electrode plate during charging and discharging of the battery can be reduced. Even if a small amount of the electrolyte solution flows out of a battery core, due to the strong interaction force between the electrode plate and the electrolyte solution and intermolecular force of the electrolyte solution, the electrolyte solution can flow back between the electrode plates in time. Therefore, the battery provided by the present application can alleviate a problem of lithium plating on a surface of the electrode plate, caused by a part of the electrode plates that is not in contact with the electrolyte solution due to untimely flowing back of the electrolyte solution. The techniques allow the battery to have good cycle stability and safety, and to achieve a high capacity.

$m$ represents the largest pore diameter in the pore diameter range of pores of the positive material layer, $i$ is the average pore diameter in the pore diameter ranges of pores of the positive material layer, and $Pc_i$ is the ratio of the volume of pores in the positive material layer when the pore diameter is $i$ to the volume of the positive material layer. $n$ represents the largest pore diameter in the pore diameter range of pores of the negative material layer, $ii$ is the average pore diameter in the pore diameter ranges of pores of the negative material layer, and $Pa_{ii}$ is the ratio of the volume of pores in the negative material layer when the pore diameter is $ii$ to the volume of the negative material layer $i$ and $ii$ may be the same, and $m$ and $n$ may also be the same. $B_i$ and $B_{ii}$ are measured in m. The value range of $Ce$ is from 1.0 g/Ah to 5.0 g/Ah.

In the present application, i is the average pore diameter value of the pore diameters in the pore diameter ranges of the positive material layer, and $ii$ is the average pore diameter value of the pore diameters in the pore diameter ranges of the negative material layer. i and $ii$ may be equal and be positive integers. $m$ is the largest value in the pore diameter range of the positive electrode plate, and $n$ is the largest value in the pore diameter range of the negative electrode plate. $Pc_i$ is a pore diameter proportion of pores corresponding to the average pore diameter in the pore diameter ranges of the positive electrode plate, and $Pa_{ii}$ is a pore diameter proportion of pores corresponding to the average pore diameter in the pore diameter ranges of the negative electrode plate. $i$, $ii$, $Pc_i$, and $Pa_{ii}$ are related to a preparation condition of the electrode plate, such as various parameters in a compaction density of the active material, a particle engineering and/or a craft of coating the electrode plate, and a rolling craft. $B_i$ and $B_{ii}$ are related to a composition of the electrolyte solution, and start and end values of the pore diameter range. Therefore, in a same pore diameter range, the value $B_i$ of the positive material layer and the value $B_{ii}$ of the negative material layer are the same. It needs to be noted that, in the present application, the positive electrode plate and the negative electrode plate may be referred to as electrode plates. The pore diameter refers to a pore space between particles in the positive material layer or the negative material layer. The pore diameter range refers to a range of pore diameters of pore diameters. The volume of the pores refers to a volume corresponding to a pore diameter.

In the foregoing relational expression, the value $a$ is a value of viscosity of the electrolyte solution measured by a viscometer, at the room temperature. For example, the viscometer may be an Ubbelohde viscometer or a rotational rheometer. This is not limited in the present application. It needs to be noted that the viscosity in the present application is a property of resisting deformation or preventing relative movement of an adjacent fluid layer by a fluid.

Under a condition that the composition of the electrolyte solution and a composition of the electrode plate remain unchanged, the value $B_i$ (or $B_{ii}$) and a pore diameter value $di$ are in an inverse relationship: $B_i = k / di$. Two or more groups of values of $di$ - $B_i$ may be obtained, and the value $k$ may be obtained by fitting the corresponding inverse relationship, to further obtain a value $B_i$ (or $B_{ii}$) under another pore diameter value. Specifically, three groups of capillaries with different

diameters (2 $\mu$m, 10 $\mu$m, and 20 $\mu$m) are selected and inserted into a select electrolyte solution, and increasing heights of the electrolyte solution in the capillaries are measured. The height value is a value $B_i$ of a corresponding pore diameter. $k1$, $k2$, and $k3$ may be obtained, and an average value $k$ may be obtained. Then, different values $di$ are substituted into the relational expression, to obtain the corresponding values $B_i$.

In addition, $i$, $ii$, $Pc_i$, and $Pa_{ii}$ of the electrode plate may also be obtained through testing. Specifically, the pore diameters of the positive electrode plate and the negative electrode plate and the distribution of the pore diameters are measured by using a mercury intrusion method. Because the pore diameter range is large, and when the pore diameter value is smaller, the value $B_i$ differs greatly, values are denser in a lower pore diameter range. In a specific implementation, based on a porosity result in an experimental test, $i$ and $ii$ may be the following values: 20000 nm, 18000 nm, 15000 nm, 12000 nm, 10000 nm, 7500 nm, 6500 nm, 5500 nm, 5000 nm, 3500 nm, 2500 nm, 1800 nm, 1200 nm, 750 nm, 500 nm, 320 nm, 200 nm, 140 nm, 90 nm, 65nm, 50 nm, 40 nm, 30 nm, 20 nm, or any values there between. It needs to be noted that, in the mercury intrusion method, a pore diameter and pore diameter distribution of a pore are measured by applying external pressure to mercury to enable the mercury to overcome the surface tension and enter the pore. Porosity refers to a percentage of a volume of a pore in a material to a total volume of the material in a natural state.

An inventor of the present application discovered, the correction factor A is related to a material composition of a battery system, but A does not changes with a change in a pore structure of the electrode plate. A larger value of A indicates a stronger force between the electrolyte solution and both the positive electrode plate and the negative electrode plate. The correction factor A may be obtained through fitting an early simulated experiment. When the value $A$ is fitted through an early simulated experiment for a battery system (where a battery is an entity), $i$, $ii$, $B_i$, $B_{ii}$, $Pc_i$, and $Pa_{ii}$ are actually measured values, and $Ce$ is also an actually measured value (denoted as $Ce$'). $Ce$' represents an actual liquid retention capability of an electrode plate in the battery for an electrolyte solution. For example, a battery core with an opening is prepared, an excess amount of electrolyte solutions are infused into the battery core and the battery core is arranged under a high vacuum level, and a content value of the electrolyte solutions in the battery is measured after a time period, where the value is the liquid retention capability $Ce$' of the electrode plate for the electrolyte solution. Then, the measured $Ce$' and the values $i$, $ii$, $B_i$, $B_{ii}$, $Pc_i$, and $Pa_{ii}$ are substituted into the foregoing relational expression, to obtain the value A of the battery system.

The foregoing relational expression provided in the present application may be used to prepare a battery with a predetermined liquid retention capability for an electrolyte solution. In some embodiments, after a value $A$ of a battery system is obtained, pore parameters $Pc_i$ and $Pa_{ii}$ of electrode plates may be obtained through calculation based on a value $Ce$ (namely, a preset value) required by a to-be-designed battery, based on the foregoing relational expression, and with reference to actually measured values $B_i$ and $B_{ii}$. Therefore, in a process of preparing the positive electrode plate and the negative electrode plate, the parameters such as the compaction density of the active material, the particle engineering and/or the craft of coating the electrode plate, and the rolling craft are configured, to obtain an electrode plate and a battery that satisfy the foregoing pore structure. In addition, the liquid retention capability of the battery for the electrolyte solution is substantially consistent with an actual liquid retention capability of the battery for the electrolyte solution.

In addition, for an existing battery system, when $B_i$ and $B_{ii}$ are measured, parameters (A, $i$, $ii$, $Pc_i$, and $Pa_{ii}$) related to a battery are learned, and the parameters are substituted into the foregoing relational expression, a liquid retention capability Ce of an electrode plate of the battery for an electrolyte solution can be calculated. Then, an electrochemical performance test (for example, a test on capacity reetention, detection on a status of lithium plating, or a test on a rate characteristic) is performed on the battery, to establish a correspondence between electrochemical performance of the battery and the value $Ce$. In this case, for another battery in this series, only a value Ce of the battery needs to pre-calculated to estimate a cycle life of the battery. In some other cases, when a value A of the battery and a value $Ce$' of an actual liquid retention capability for an electrolyte solution are obtained, and the two values are substituted into the foregoing relational expression, a pore structure of an electrode plate can be obtained through calculation.

In some embodiments, fitting of the correction factor A includes the following steps.

First, various parameters in the compaction density of the active material on a positive electrode and a negative electrode, the particle engineering and/or the craft of coating the electrode plate, and the rolling craft in the process of preparing the positive electrode plate and the negative electrode plate of the battery are adjusted, to prepare five groups of positive electrode plates and negative electrode plates with different pore structures. Then, the following tests are performed.

    (1) Measure a value $B_i$ and a value $B_{ii}$.

    (2) Measure values of $i$, $ii$, $Pc_i$, and $Pa_{ii}$ of the five groups of electrode plates.

    (3) Laminate the positive electrode plate, the separator, the negative electrode plate in sequence, and assemble the positive electrode plate, the separator, the negative electrode plate in a glovebox, to prepare five battery-core samples, and measure a liquid retention capability of an electrode plate in the battery core for an electrolyte solution. It needs to be noted that, in the foregoing tests, except pore diameters of the positive material layer and the negative material layer and distribution of the pore diameters, all other conditions remain consistent. In some embodiments, the following steps are included.

A hole with a certain size is opened on a housing of the battery core, and mass of the battery core is weighed and recorded as M1. Then, an excess amount of electrolyte solutions under this condition are infused, and vacuum pumping is performed for 2 minutes (min) under a fixed vacuum condition. Finally, the battery core is sealed, and mass of the battery core is weighed and recorded as M2. Mass of the electrolyte solutions in the tested sample is recorded as Y, where Y = M2 - M1. A value of Y / M is calculated, where M is a sum of mass of the positive material layer in the positive electrode plate and mass of the negative material layer in the negative electrode plate, and the value of Y / M is the liquid retention capability $Ce'$ of the electrode plate for the electrolyte solution.

(4) Values $Ce'$ of the five battery-core samples are substituted into the foregoing relational expression, and a value of each correction factor $A$ under this experimental condition is calculated, to obtain a value A of the battery system. Values $A$ of the five groups are approximately the same within an error tolerance.

In an implementation of the present application, A is in a range from 0.01s to 100s. Controlling the value A to be within this range may ensure the liquid retention capability of the electrode plate for the electrolyte solution, thereby providing a battery with good cycle stability, high capacity retention, and a long battery cycle life.

In an implementation of the present application, R is in a range from 0.1 Ah to 300 Ah. In some embodiments, R is in a range from 10 Ah to 200 Ah. In some embodiments, $R$ is in a range from 10 Ah to 100 Ah. The foregoing relational expression defined in the present application is universal for batteries with different capacities.

In an implementation of the present application, a porosity of the positive material layer is in a range from 10% to 50%, and a porosity of the negative material layer is in a range from 10% to 70%. The porosities of the positive material layer and the negative material layer may be the same or different. Controlling the porosities of the positive electrode plate and the negative electrode plate to be within the foregoing ranges may improve the liquid retention capability of the electrode plate for the electrolyte solution, and may not affect performance of the positive electrode plate and the negative electrode plate.

In an implementation of the present application, a distribution range of the pore diameter of the positive material layer and a distribution range of the pore diameter of the negative material layer are from 20 nm to 20000 nm. Actual distribution ranges of the pore diameter of the positive material layer and the pore diameter of the negative material layer may be the same or different. Controlling the pore diameters of the positive material layer and the negative material layer to be within the foregoing range may improve the liquid retention capability of the electrode plate for the electrolyte solution, and may construct a conductive network on the positive electrode plate and the negative electrode plate.

In an implementation of the present application, values of $m$ and $n$ are 20000 nm. Because the pore diameter range in a porosity test result is large, and when the pore diameter value is smaller, the value $B_i$ differs greatly, pore diameter values are denser in a lower section of the pore diameter range. In some implementations, a length of the pore diameter range may be from 20 nm to 100 nm. For example, the length of the pore diameter range may be the following values: 20000 nm, 18000 nm, 15000 nm, 12000 nm, 10000 nm, 7500 nm, 6500 nm, 5500 nm, 5000 nm, 3500 nm, 2500 nm, 1800 nm, 1200 nm, 750 nm, 500 nm, 320 nm, 200 nm, 140 nm, 90 nm, 65nm, 50 nm, 40 nm, 30 nm, or 20 nm.

In an implementation of the present application, $a$ is in a range from 0.5 mPa·s to 50 mPa·s. For example, the value of $a$ may be 0.5 mPa·s, 1.0 mPa·s, 2.0 mPa·s, 3.0 mPa·s, 4.0 mPa·s, 5.0 mPa·s, 6.0 mPa·s, 7.0 mPa·s, 8.0 mPa·s, 9.0 mPa·s, 10.0 mPa·s, 20 mPa·s, 30 mPa·s, 40 mPa·s, or 50 mPa·s. In some implementations, $a$ is from 0.5 mPa·s to 5 mPa·s. For example, $a$ may be 0.5 mPa·s, 1.5 mPa·s, 2.5 mPa·s, 3.5 mPa·s, 4.5 mPa·s, or 5.0 mPa·s. A suitable viscosity of the electrolyte solution may improve the liquid retention capability of the electrode plate for the electrolyte solution, and may wet the positive electrode plate and the negative electrode plate by the electrolyte solution to maintain an internal resistance of the battery core in a suitable range.

In an implementation of the present application, the electrolyte solution includes an organic solvent and a lithium salt. The lithium salt includes, but is not limited to, at least one of lithium hexafluorophosphate, lithium tetrafluoroborate, lithium bis(oxalato)borate, lithium difluoro(oxalato)borate, lithium bis(fluorosulfonyl)imide, lithium bis(trifluoromethanesulfonyl)imide, lithium difluorophosphate, and lithium 4,5-dicyano-2-(trifluoromethyl)imidazole. The organic solvent includes, but is not limited to, at least one of ethylene carbonate (EC), diethyl carbonate (DEC), dimethyl carbonate (DMC), and ethyl methyl carbonate (EMC).

In an implementation of the present application, the electrolyte solution further includes a viscosity modifier. The viscosity modifier includes, but is not limited to, at least one of polyimide, polyvinylidene difluoride, and polyacrylic acid. The viscosity modifier is an inactive organic liquid with high viscosity. The addition of the viscosity modifier can adjust the viscosity of the electrolyte solution to a preset value without changing another component of the electrolyte solution, to satisfy a design requirement on the battery.

In an implementation of the present application, the positive material layer includes a positive active material, a conductive agent (e.g., a first conductive agent), and a binder(e.g., a first binder). The negative material layer includes a negative active material, a conductive agent (e.g., a second conductive agent), and a binder (e.g., a second binder). The positive active material, the negative active material, the conductive agents, and the binders are all materials commonly used by a person skilled in the art. For example, the positive active material includes, but is not limited to, at least one of lithium iron phosphate, lithium manganese phosphate, lithium manganese iron phosphate, lithium vanadium phosphate, lithium cobalt phosphate, lithium cobaltate, lithium manganate, lithium nickel manganese oxide, lithium nickel manganese cobalt oxides (NCM), lithium nickel cobalt aluminum oxide (NCA), and a lithium-rich manganese-based material. For example, the negative active material includes, but is not limited to, at least one of graphite, nature graphite, mesocarbon microbead, and a silicon-carbon negative material.

The conductive agent includes, but is not limited to, at least one of a carbon nanotube (CNT), carbon fiber (CF), carbon black (such as acetylene black or Ketjen black), furnace black, and graphene. The binder includes, but is not limited to, at least one of polyvinylidene difluoride (PVDF), polytetrafluoroethylene (PTFE), polyvinyl alcohol (PVA), styrene-butadiene rubber (SBR), polyacrylonitrile (PAN), polyimide (PI), poly(acrylic acid) (PAA), polyacrylate, polyolefin (such as polyethylene, polypropylene, and polystyrene), carboxymethyl cellulose (CMC), and sodium alginate.

Correspondingly, an embodiment of the present application further provides an electrical device. As shown in FIG. 2, an electrical device 1 includes the battery 10. The electrical device may be a portable terminal (such as a mobile phone, a notebook computer, or a tablet computer), or may be a electrical vehicle. This is not limited in the present application. The electrical device includes a load connected to the battery. For example, the load may be various elements in the portable terminal, or a motor in the electrical vehicle. The battery is configured to supply power to the load. Because the battery is used, the electrical device has a good battery life and safety performance.

The technical solutions of the present application are described in detail by using a plurality of embodiments below.

Embodiment 1

Preparation of an electrolyte solution: after EC, DMC, and DEC were mixed in a ratio of 4 : 3 : 3, an amount of $LiPF_6$ was added, so that a concentration of $LiPF_6$ in a mixed solution was 1 mol/L. Then, an amount of a viscosity modifier (polyimide) was added, to obtain the electrolyte solution. A viscosity value $a$ of the electrolyte solution at room temperature was tested by using a viscometer. A length of the pore diameter was set to 50 nm, and a value $B_i$ was measured, where $B_i = B_{ii}$.

Preparation of a positive electrode plate: a positive active paste was obtained by evenly mixing a positive active material (monocrystal NCM811, where a D50 grain size was 3.87 $\mu$m) with a mass ratio of 94%, a conductive agent (carbon black + CNT) with a mass ratio of 4%, and a binder (PVDF) with a mass ratio of 2% with N-methyl-2-pyrrolidone (NMP). The prepared positive active paste was coated on aluminum foil of a positive current collector by a coating machine, was dried, and was subject to rolling and die cutting after dying, to obtain the positive electrode plate.

Preparation of a negative electrode plate: a negative active paste was obtained by evenly mixing a negative active material (graphite) with a mass ratio of 96%, a conductive agent (acetylene black) with a mass ratio of 2%, and a binder (PVDF) with a mass ratio of 2% with NMP. The prepared negative active paste was coated on copper foil of a negative current collector, was dried, and was subject to rolling and die cutting after dying, to obtain the negative electrode plate.

Measurement of a pore structure of the electrode plate: values $i$, $ii$, $Pc_i$, and $Pa_{ii}$ of the positive electrode plate and the negative electrode plate were measured, and a value of

$$Ce = A \times a \times [\sum_{i=20}^{m}(Bi \times Pci) + \sum_{ii=20}^{n}(Bii \times Paii)]/R$$

was calculated. A range of a value Q was from 10 m to 200 m, and a result of a test method was as follows (a battery S1 was used as an example).

| Value of $i/ii$ (nm) | $Pc_i$ | $Pa_{ii}$ | $B_i / B_{ii}$ (m) | Qa (m) | Qc (m) |
|---|---|---|---|---|---|
| 20000 | 1.157% | 2.431% | 1.03 | 0.025 | 0.012 |
| 18000 | 1.180% | 1.942% | 1.14 | 0.022 | 0.013 |
| 15000 | 4.175% | 6.909% | 1.37 | 0.094 | 0.057 |
| 12000 | 2.283% | 3.930% | 1.71 | 0.067 | 0.039 |
| 10000 | 2.918% | 3.142% | 2.05 | 0.064 | 0.060 |
| 7500 | 1.020% | 1.477% | 2.73 | 0.040 | 0.028 |

(continued)

| Value of $i/ii$ (nm) | $Pc_i$ | $Pa_{ii}$ | $B_i / B_{ii}$ (m) | $Qa$ (m) | $Qc$ (m) |
|---|---|---|---|---|---|
| 6500 | 2.603% | 3.074% | 3.15 | 0.097 | 0.082 |
| 5500 | 1.296% | 1.825% | 3.73 | 0.068 | 0.048 |
| 5000 | 0.966% | 1.640% | 4.10 | 0.067 | 0.040 |
| 3500 | 0.676% | 1.268% | 5.86 | 0.074 | 0.040 |
| 2500 | 1.018% | 1.625% | 8.20 | 0.133 | 0.083 |
| 1800 | 0.939% | 1.474% | 11.39 | 0.168 | 0.107 |
| 1200 | 0.790% | 1.499% | 17.08 | 0.256 | 0.135 |
| 750 | 0.554% | 0.917% | 27.33 | 0.251 | 0.151 |
| 500 | 0.207% | 0.385% | 41.00 | 0.158 | 0.085 |
| 320 | 0.224% | 0.391% | 64.06 | 0.250 | 0.143 |
| 200 | 0.114% | 0.200% | 102.50 | 0.205 | 0.117 |
| 140 | 0.117% | 0.324% | 146.43 | 0.474 | 0.171 |
| 90 | 0.186% | 0.660% | 227.78 | 1.504 | 0.424 |
| 65 | 0.104% | 1.315% | 315.38 | 4.149 | 0.329 |
| 50 | 0.080% | 1.843% | 410.00 | 7.554 | 0.329 |
| 40 | 0.299% | 1.794% | 512.50 | 9.197 | 1.534 |
| 30 | 1.122% | 1.562% | 683.33 | 10.673 | 7.668 |
| 20 | 0.740% | 1.911% | 1025.00 | 19.493 | 7.584 |
| Total values of $Qa$ and $Qc$ | | | | 55.1 | 19.3 |
| Total value of $Q$ | | | | | 74.4 |

The positive electrode plate, a separator, and the negative electrode plate were alternately laminated together, and a dry battery core was prepared through laminating. A value of a capacity R of the battery core was 9.2 Ah. The separators separate the positive electrode plates and the negative electrodes plate. The dry battery core was arranged/disposed in an outer package of an aluminum laminated film for encapsulation and drying, and the electrolyte solution was infused.to obtain the battery in Embodiment 1 denoted as S1.

According to the battery production method provided in Embodiment 1, batteries in Embodiment 2 to Embodiment 14 were respectively produced based on ratios in Table 1, and the batteries in Embodiment 2 to Embodiment 14 were denoted as S2 to S14 respectively.

Table 1 Parameters of the batteries S1 to S14 in the embodiments

| Battery number | Positive active material | D50/μm | Viscosity of an electrolyte solution a/mPa·s | Porosity of a positive material layer (20 nm to 20 μm) | Porosity of a negative material layer (20 nm to 20 μm) | Value $Q$/m | Value $R$/Ah | Liquid retention capability, obtained through calculation, of the battery for the electrolyte solution $Ce$/g·Ah |
|---|---|---|---|---|---|---|---|---|
| S1 | NCM811 Monocrystal | 3.87 | 1.85 | 23.7% | 42.7% | 74.4 | 82 | 2.27 |
| S2 | NCM811 Monocrystal | 3.87 | 1.22 | 23.7% | 42.7% | 76.6 | 82 | 2.04 |
| S3 | NCM811 Monocrystal | 3.87 | 2.57 | 23.7% | 42.7% | 71.9 | 82 | 2.4 |

(continued)

| Battery number | Positive active material | D50/$\mu$m | Viscosity of an electrolyte solution a/mPa·s | Porosity of a positive material layer (20 nm to 20 $\mu$m) | Porosity of a negative material layer (20 nm to 20 $\mu$m) | Value Q/m | Value R/Ah | Liquid retention capability, obtained through calculation, of the battery for the electrolyte solution Ce/g·Ah |
|---|---|---|---|---|---|---|---|---|
| S4 | NCM811 Monocrystal | 3.87 | 0.67 | 23.7% | 42.7% | 79.6 | 82 | 1.62 |
| S5 | NCM811 Monocrystal | 3.87 | 43.68 | 23.7% | 42.7% | 66.7 | 82 | 3.68 |
| S6 | NCM811 Monocrystal | 3.87 | 1.85 | 17.3% | 36.3% | 60.2 | 82 | 1.92 |
| S7 | NCM811 Monocrystal | 3.87 | 1.85 | 29.2% | 48.0% | 86.4 | 82 | 2.64 |
| S8 | NCM811 Monocrystal | 3.87 | 1.85 | 33.2% | 52.5% | 96.2 | 82 | 2.88 |
| S9 | NCM811 Polycrystal | 12.44 | 1.85 | 27.6% | 46.0% | 82.6 | 82 | 2.52 |
| S10 | NCM811 Monocrystal blended polycrystal | 10.27 | 1.85 | 20.1% | 37.9% | 65.1 | 82 | 2.04 |
| S11 | NCM523 Monocrystal | 4.31 | 1.85 | 26.2% | 45.2% | 80.5 | 82 | 2.4 |
| S12 | NCM622 Monocrystal | 3.96 | 1.85 | 24.8% | 43.6% | 76.6 | 82 | 2.28 |
| S13 | NCM811 Monocrystal | 3.87 | 1.85 | 23.7% | 42.7% | 74.4 | 13 | 3.26 |
| S14 | NCM811 Monocrystal | 3.87 | 1.85 | 23.7% | 42.7% | 74 | 160 | 1.88 |

NCM811 was $LiNi_{0.8}Co_{0.1}Mn_{o0.1}O_2$. NCM622 was $LiNi_{0.6}Co_{0.2}Mn_{0.2}O_2$. NCM523 was $LiNi_{0.5}Co_{0.2}Mn_{0.3}O_2$.

To highlight beneficial effects of the embodiments of the present application, the following three comparative examples were provided. According to the battery production method provided in Embodiment 1, batteries in comparative examples 1 to 3 were respectively produced based on ratios in Table 2, and the batteries in the comparative examples 1 to 3 were denoted as DS1 to DS3 respectively.

Table 2 Parameters of the batteries DS1 to DS3 in the comparative examples

| Battery number | Positive active material | D50/$\mu$m | Viscosity of an electrolyte solution a/mPa·s | Porosity of a positive material layer (20 nm to 20 $\mu$m) | Porosity of a negative material layer (20 nm to 20 $\mu$m) | Value Q/m | Value R/Ah | Liquid retention capability, obtained through calculation, of the battery for the electrolyte solution Ce/g·Ah |
|---|---|---|---|---|---|---|---|---|
| DS1 | NCM81 Monocrystal | 3.87 | 0.11 | 23.7% | 42.7% | 83.6 | 82 | 0.63 |
| DS2 | NCM81 Monocrystal | 3.87 | 14.36 | 23.7% | 42.7% | 70.8 | 82 | 5.65 |

(continued)

| Battery number | Positive active material | D50/μm | Viscosity of an electrolyte solution $a$/mPa·s | Porosity of a positive material layer (20 nm to 20 μm) | Porosity of a negative material layer (20 nm to 20 μm) | Value $Q$/m | Value $R$/Ah | Liquid retention capability, obtained through calculation, of the battery for the electrolyte solution $Ce$/g·Ah |
|---|---|---|---|---|---|---|---|---|
| DS3 | NCM81 Monocrystal | 3.87 | 1.85 | 14.3% | 34.8% | 56.6 | 82 | 0.47 |

An electrochemical performance test was performed on the batteries prepared in the foregoing embodiments and comparative examples. Details were as follows.

(1) Detection on a status of lithium plating: a 0.5C/0.5C cycle test was performed on the battery at 25 °C, and a voltage range was from 2.5 V to 4.2 V. A status of lithium plating on a negative electrode of the battery after 500 cycles was recorded, and a result was summarized in Table 3.
(2) Cycle performance test: a 0.5C/0.5C cycle test was performed on the battery at 25 °C, and a voltage range was from 2.5 V to 4.2 V. Capacity retention of the battery after 500 cycles was recorded, and a result was summarized in Table 3.
(3) High-current performance test: a high-current charging and discharging test was performed on the battery at 25 °C, a voltage range was from 2.5 V to 4.2 V, and charging and discharging were performed using a high current of 5C/5C. Capacity retention of the battery was recorded, and a result was summarized in Table 3.

Table 3 Summary of results of the electrochemical performance test on the batteries prepared in the embodiments and comparative examples

| Battery number | Status of lithium plating on the battery after 500 cycles | Capacity retention after 500 cycles | Capacity retention of the battery at the current of 5C |
|---|---|---|---|
| S1 | No lithium plating | 91% | 92% |
| S2 | No lithium plating | 92% | 91% |
| S3 | No lithium plating | 93% | 91% |
| S4 | No lithium plating | 92% | 90% |
| S5 | No lithium plating | 92% | 89% |
| S6 | No lithium plating | 91% | 90% |
| S7 | No lithium plating | 90% | 91% |
| S8 | No lithium plating | 89% | 92% |
| S9 | No lithium plating | 89% | 93% |
| S10 | No lithium plating | 91% | 92% |
| S11 | No lithium plating | 94% | 93% |
| S12 | No lithium plating | 94% | 92% |
| S13 | No lithium plating | 91% | 93% |
| S14 | No lithium plating | 91% | 92% |
| DS1 | Lithium plating | 71% | 92% |
| DS2 | No lithium plating | 90% | 52% |
| DS3 | Lithium plating | 81% | 90% |

It can be learned with reference to the parameters of the batteries in Table 1 and Table 2 and the test results of the batteries in Table 3 that the batteries satisfying the relational expression defined in the present application had excellent electrochemical performance. In some embodiments, the batteries S1 to S14 in the embodiments all had a good capacity retention. Comparing the battery S1 and the battery DS1, under a same condition, an electrolyte solution with an excessively low viscosity was used for DS1, and the value Ce of DS1 was excessively small. Consequently, a status of lithium plating on the battery was severe, and a capacity of the battery deteriorated quickly. Comparing the battery S1 and the battery DS2, the value Ce of the battery DS2 exceeded an upper limit defined in the present application, an internal resistance of the battery was large, resulting in very low capacity retention of the battery at the high-rate 5C current. Comparing the battery S1 and the battery DS3, under a same condition, the excessively small porosity of the electrode plate of DS3 led to the small value *Ce*, resulting in severe lithium plating on the battery and quick deterioration of a capacity of the battery.

The foregoing are examples of the embodiments of this application. It should be noted that, a person of ordinary skill in the art can further make improvements and refinements without departing from the principle of the present application, and the improvements and refinements shall fall within the protection scope of the present application.

**Claims**

1. A battery (10), comprising a positive electrode plate (110), a negative electrode plate (120), an electrolyte solution (130), and a separator (140) between the positive electrode plate and the negative electrode plate, the positive electrode plate comprising a positive current collector (111) and a positive material layer (112) disposed on the positive current collector, the negative electrode plate comprising a negative current collector (121) and a negative material layer (122) disposed on the negative current collector, and the positive electrode plate, the negative electrode plate, and the electrolyte solution satisfying:

$$Ce = A \times a \times [\sum_{i=20}^{m} (Bi \times Pci) + \sum_{ii=20}^{n} (Bii \times Paii)]/R$$

wherein, Ce is a liquid retention capability of the positive electrode plate and the negative electrode plate for the electrolyte solution, and a range of Ce is from 1.0 g/Ah to 5.0 g/Ah; A is a correction factor; *a* is a viscosity of the electrolyte solution at room temperature and is measured in mPa·s; R is a capacity of the battery and is measured in Ah; $B_i$ is a capillary index of a pore diameter of the positive material layer, $B_{ii}$ is a capillary index of a pore diameter of the negative material layer, and $B_i$ and $B_{ii}$ are measured in meter; m is a largest pore diameter of pores of the positive material layer, i is an average pore diameter of pores of the positive material layer, and $Pc_i$ is a ratio of a volume of pores in the positive material layer with a pore diameter i to a volume of the positive material layer; and n is a largest pore diameter of pores of the negative material layer, *ii* is an average pore diameter of the pores of the negative material layer, and $Pa_{ii}$ is a ratio of a volume of pores in the negative material layer with a pore diameter *ii* to a volume of the negative material layer.

2. The battery according to claim 1, wherein R is in a range from 0.1 Ah to 300 Ah, and A is in a range from 0.01s to 100s.

3. The battery according to claim 1 or 2, wherein *R* is in a range from 10 Ah to 100 Ah.

4. The battery according to any one of claims 1 to 3, wherein a distribution range of the pore diameter of the positive material layer is from 20 nm to 20000 nm, and a distribution range of the pore diameter of the negative material layer is from 20 nm to 20000 nm.

5. The battery according to any one of claims 1 to 4, wherein a porosity of the positive material layer is in a range from 10% to 50%, and a porosity of the negative material layer is in a range from 10% to 70%.

6. The battery according to any one of claims 1 to 5, wherein a minimum value of *i* and a minimum value of *ii* are 50, and a value of *m* and a value of *n* are 20000 nm.

7. The battery according to any one of claims 1 to 6, wherein a value of i is 20000 nm, 18000 nm, 15000 nm, 12000 nm, 10000 nm, 7500 nm, 6500 nm, 5500 nm, 5000 nm, 3500 nm, 2500 nm, 1800 nm, 1200 nm, 750 nm, 500 nm, 320 nm, 200 nm, 140 nm, 90 nm, 65nm, 50 nm, 40 nm, 30 nm, 20 nm, or between any two of above values; and a value of *ii* is 20000 nm, 18000 nm, 15000 nm, 12000 nm, 10000 nm, 7500 nm, 6500 nm, 5500 nm, 5000 nm, 3500 nm, 2500 nm, 1800 nm, 1200 nm, 750 nm, 500 nm, 320 nm, 200 nm, 140 nm, 90 nm, 65nm, 50 nm, 40 nm, 30 nm, 20 nm, or between any two of above values.

8.  The battery according to any one of claims 1 to 7, wherein $a$ is in a range from 0.5 mPa·s to 50 mPa·s.

9.  The battery according to any one of claims 1 to 8, wherein the electrolyte solution comprises an organic solvent and a lithium salt, wherein

    the lithium salt comprises at least one of lithium hexafluorophosphate, lithium tetrafluoroborate, lithium bis(oxalato)borate, lithium difluoro(oxalato)borate, lithium bis(fluorosulfonyl)imide, lithium bis(trifluoromethanesulfonyl)imide, lithium difluorophosphate, or lithium 4,5-dicyano-2-(trifluoromethyl)imidazole, and
    the organic solvent comprises at least one of ethylene carbonate, diethyl carbonate, dimethyl carbonate, or ethyl methyl carbonate.

10. The battery according to any one of claims 1 to 9, wherein the electrolyte solution comprises a viscosity modifier, and the viscosity modifier comprises at least one of polyimide, polyvinylidene difluoride, or polyacrylic acid.

11. The battery according to any one of claims 1 to 10, wherein the positive material layer comprises a positive active material, a first conductive agent, and a first binder; and the negative material layer comprises a negative active material, a second conductive agent, and a second binder.

12. An electrical device (1), comprising the battery (10) according to any one of claims 1 to 11.

10

150

110 { 111
     112 }

121 } 120
122

140

130

FIG. 1

Electrical device 1

Battery 10

FIG. 2

## INTERNATIONAL SEARCH REPORT

| International application No. |
| --- |
| **PCT/CN2023/081698** |

### A. CLASSIFICATION OF SUBJECT MATTER

H01M4/13(2010.01)i

According to International Patent Classification (IPC) or to both national classification and IPC

### B. FIELDS SEARCHED

Minimum documentation searched (classification system followed by classification symbols)

IPC:H01M4

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 保液, 电池, 电极, 电解液, 负极, 正极, 极片, 空隙, 孔, 体积, 粘度, 粘性, Ah, g, mPa, battery, electrolyte, retain, hold, electrode, anode, cathode, porous, pore volume

### C. DOCUMENTS CONSIDERED TO BE RELEVANT

| Category* | Citation of document, with indication, where appropriate, of the relevant passages | Relevant to claim No. |
| --- | --- | --- |
| A | CN 111403801 A (FARASIS ENERGY (GANZHOU) CO., LTD.) 10 July 2020 (2020-07-10) description, paragraphs [0008]-[0036], [0141]-[0144] and [0184] | 1-12 |
| A | CN 110579569 A (DONGGUAN WEIKE BATTERY CO., LTD.) 17 December 2019 (2019-12-17) entire document | 1-12 |
| A | CN 113363671 A (NINGDE AMPEREX TECHNOLOGY LTD.) 07 September 2021 (2021-09-07) entire document | 1-12 |
| A | JP 2018056413 A (ASAHI KASEI CORP.) 05 April 2018 (2018-04-05) entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 June 2023** | **19 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**15**

## INTERNATIONAL SEARCH REPORT
**Information on patent family members**

International application No.

**PCT/CN2023/081698**

| Patent document cited in search report | | | Publication date (day/month/year) | Patent family member(s) | | | Publication date (day/month/year) |
|---|---|---|---|---|---|---|---|
| CN | 111403801 | A | 10 July 2020 | None | | | |
| CN | 110579569 | A | 17 December 2019 | None | | | |
| CN | 113363671 | A | 07 September 2021 | None | | | |
| JP | 2018056413 | A | 05 April 2018 | JP | 6754260 | B2 | 09 September 2020 |

Form PCT/ISA/210 (patent family annex) (July 2022)

**REFERENCES CITED IN THE DESCRIPTION**

**Patent documents cited in the description**

- CN 202210251599